**Europäisches Patentamt**

**European Patent Office**

**Office européen des brevets**

(19)

(11) **EP 1 294 148 A1**

(12) ## EUROPEAN PATENT APPLICATION

(43) Date of publication:
**19.03.2003 Bulletin 2003/12**

(51) Int Cl.$^7$: **H04L 25/02**, H04L 27/26

(21) Application number: **01121934.2**

(22) Date of filing: **12.09.2001**

| | |
|---|---|
| (84) Designated Contracting States:<br>**AT BE CH CY DE DK ES FI FR GB GR IE IT LI LU<br>MC NL PT SE TR**<br>Designated Extension States:<br>**AL LT LV MK RO SI**<br><br>(71) Applicant: **Sony International (Europe) GmbH<br>10785 Berlin (DE)**<br><br>(72) Inventors:<br>• **Stirling-Gallacher, Richard,<br>Advanced Technology<br>Heinrich-Hertz-Str. 1, 70237 Stuttgart (DE)** | • **Wang, Zhaocheng,<br>c/o Advanced Technology Center<br>Heinrich-Hertz-Str. 1, 70237 Stuttgart (DE)**<br>• **Schober, Henrik, Chemie Turm II - Zimmer 624<br>Universität Karlsruhe, 76128 Karlsruhe (DE)**<br><br>(74) Representative: **Rupp, Christian, Dipl.Phys. et al<br>Mitscherlich & Partner<br>Patent- und Rechtsanwälte<br>Sonnenstrasse 33<br>80331 München (DE)** |

(54) **Delay spread estimation of multipath fading channels in a OFDM receiver**

(57)     Method for Measuring the Dispersion of a Multipath Channel for an OFDM Receiver.

Orthogonal Frequency Division Multiplexing (OFDM) system using reference symbols to support channel tracking for enabling the receiver (104) to estimate the channel dispersion ($\Delta$) of a mobile radio channel (103) being severely impaired by attenuation fades (frequency-selective fading) and a time-variant behavior.

In the proposed solution of the underlying invention a delayed version of the received data signal y(k) is correlated with an estimated version $\hat{s}$(k) of the demodulated and re-modulated transmitted data signal $y(k)_\lambda$ in order to estimate the channel impulse response $h(\tau_{v,k})$, wherein $\tau_{v,k}$ denotes the delay for the $v$-th channel estimation sample, and to calculate the delay spread $\Delta_k$ of the mobile radio channel (130).

FIG. 2a

EP 1 294 148 A1

**Description**

FIELD AND BACKGROUND OF THE INVENTION

The underlying invention generally relates to the field of wireless communication systems, especially to pilot-assisted multi-carrier systems considering channel estimation, and, more particularly, to a technique for a receiver in an Orthogonal Frequency Division Multiplexing (OFDM) system using reference symbols to support channel tracking for enabling the receiver to estimate the channel dispersion of a mobile radio channel being severely impaired by attenuation fades (frequency-selective fading) and a time-variant behavior.

The invention can also be applied to systems using OFDM with other access schemes (f.e. Multicarrier CDMA/OFDM).

Wireless environments are characterized by a variety of factors that impede reliable communication. Generally, the sources of degradation can be grouped into two categories: channel impairments and noise sources. On the one hand, a broadband radio channel, as needed for the transmission of high data rates, is characterized by severe attenuation fades (frequency-selective fading) caused by the multipath propagation of the transmitted mobile radio signals. On the other hand, it exhibits a time-variant behavior due to the mobility of the receiver, which possibly requires a continuous adaptation of the transmission system to said behavior. Thereby, despite a plurality of differences, most wireless links share two common characteristics, time dispersion and time variability, which shall briefly be described in the following sections.

1. Time Dispersion

Wireless links can be described by the presence of multiple signal paths between transmitter and receiver. These multipath components are generated whenever signals are reflected by objects in the environment such as buildings, walls, ceilings, mountains, cars, people, etc. Differences in reflected path lengths cause impulsive signal transmissions to arrive at the receiver with a finite temporal scattering called the root mean square (RMS) delay spread $\Delta$ of the multipath propagation channel. With the aid of $\Delta$, the approximate duration of the channel "echoes" resulting from multipath arrivals can be measured.

Time-dispersive channels generate at least two potentially deleterious effects at the receiver, namely frequency-selective amplitude and phase variations and intersymbol interferences (ISIs). Frequency-dependent variations are caused by (random) delayed signal components adding out of phase at the receiver. Since the frequency location of fades is strongly dependent on the signal phase, the overall channel response is highly sensitive to changes in the location and orientation of the receiver. Meanwhile, intersymbol interferences (ISIs) occur whenever delayed arrivals from one symbol interval "spill over" into subsequent symbol intervals. ISIs impede the ability of the receiver to distinguish the desired signal from the echoes of previously transmitted symbols. The impact of both channel selectivity and ISIs primarily depends on whether the system uses narrowband or wideband signaling.

2. Time Variability

Wireless channels, like other communication mediums, are subject to time-varying behavior. But one of the distinguishing features of wireless links is the magnitude and rate at which these variations occur. One important measure of variability for a wireless channel is the coherence time $T_{coh}$ - the interval during which the impulse response of the multipath propagation channel remains correlated. The coherence time $T_{coh}$ can be approximated by the reciprocal value of the Doppler spread $B_D$ using a generalized channel model that explicitly incorporates the channel's time dependence:

$$T_{coh} \approx \frac{1}{B_D} \text{ with } B_D \equiv 2 \cdot f_D,$$

wherein $f_D$ denotes the Doppler shift of the channel.

Thereby, $T_{coh}$ provides a measure of the rate at which variations in the wireless link occur. Channels are described as fast fading or slow fading depending on the length of the coherence time $T_{coh}$ relative to a single symbol interval: A slowly changing channel has a large coherence time $T_{coh}$ or, equivalently, a small Doppler spread $B_D$, and vice versa. As can be expected, channel coherence times $T_{coh}$ are strongly dependent on the rate of motion for the transmitter, receiver, and other objects in the environment. For narrowband signals, the fading rate directly affects the responsivity and dynamic range requirements of the receiver. For wideband systems, the fading rate primarily impacts the required convergence rate for adaptive receiver algorithms.. One solution would be to exploit time-varying channel knowledge to provide optimized time-varying performance. This approach requires both channel estimation and adaptive receiver implementation, but offers the promise of substantial performance gains. Of course, the larger and faster the link variations, the more difficult (and computationally intensive) the tasks of estimation and adaptation become. Hence, the receiver consumes more energy. Because channel modeling is an active area of wireless research, a wide variety of models - both empirical and statistical - have been developed to characterize the channel impairments described above.

In order to understand the basic terms referring to the effects of time dispersion and time variability which are used in the preferred embodiment of the underlying invention, it is necessary to briefly describe the underlying channel model.

A generalized model of frequency-selective channels can be obtained on the condition that the time delays $\tau$ are continuously distributed. In this case the received signal y(t) can be interpreted as a continuum of multipath components. Compared with the assumption of a discrete model for a plurality of channels, this approach is more realistic, e.g. for the registration of tropospheric scattering processes.

The so-called Wide-Sense Stationary Uncorrelated Scattering (WSSUS) channel model is a commonly employed model for the multipath propagation channel experienced in mobile communications. Second-order statistics of these channels are described by the delay cross-power spectral density $\varphi_h(\tau, \Delta t)$ or by its Fourier transform, the spaced-time correlation function $\Phi_H(\Delta f, \Delta \tau)$ of the multipath propagation channel.

When a narrowband signal

$$x(t) = \mathrm{Re}\left\{ \widetilde{x}(t) \cdot e^{j \cdot 2\pi \cdot f_c \cdot t} \right\}$$

having the complex envelope $\widetilde{x}(t)$ and the center frequency $f_c$ is transmitted, the received narrowband signal

$$y(t) = \mathrm{Re}\left\{ \widetilde{y}(t) \cdot e^{j \cdot 2\pi \cdot f_c \cdot t} \right\}$$

has a complex envelope $\widetilde{y}(t)$ which can be expressed by means of the following convolution integral:

$$\widetilde{y}(t) = \widetilde{x}(t) * h(\tau, t) = \int_{-\infty}^{+\infty} h(\tau, t) \cdot \widetilde{x}(t - \tau)\, d\tau ,$$

wherein

$h(\tau, t)$　denotes the time-varying complex baseband impulse response of the underlying multipath propagation channel,

$\tau$　represents the time delay, and

$t$　represents the observation instant.

The channel is said to exhibit a so-called "delay uncorrelated scattering" (US) in case of

$$\frac{1}{2} \cdot E\left\{ h^*(\tau_a, t_1) \cdot h(\tau_b, t_2) \right\} = \varphi_h(\tau_a, t_1, t_2) \cdot \delta(\tau_b - \tau_a) ,$$

wherein $\delta(\cdot)$ denotes Dirac's delta function, and "wide-sense stationary" (WSS) if

$$\varphi_h(\tau, t_1, t_2) = \varphi_h(\tau, t_2 - t_1) .$$

Using the WSSUS assumptions described above, the delay cross-power spectral density $\varphi_h(\tau,\Delta t)$ is defined as follows:

$$\varphi_h\left(\tau,\Delta t\right) \equiv \frac{1}{2}\cdot E\left\{h^*\left(\tau,t\right)\cdot h\left(\tau,t+\Delta t\right)\right\} = \lim_{T\to\infty}\frac{1}{2\cdot T}\cdot \int_{-T/2}^{T/2} h^*\left(\tau,t\right)\cdot h\left(\tau,t+\Delta t\right) dt,$$

wherein

$\Delta t$      represents the difference in the observation instant t,
"*"      denotes the complex conjugate operation, and
$E\{\cdot\}$      denotes the expectation over the time t.

This equation expresses the channel correlation as a function of both the time delay $\tau$ and the difference $\Delta t$ in the observation instant t.
For the spectral properties of the transmission channel, the so-called root mean square (RMS) delay spread $\Delta$ is of paramount importance. To calculate $\Delta$, a so-called "Multipath Intensity Profile" (MIP) or "Power Delay Profile" (PDP) as given by

$$\text{PDP}\left(\tau\right) \equiv \varphi_h\left(\tau,\Delta t\right)\Big|_{\Delta t=0} = \frac{1}{2}\cdot E\left\{\left|h\left(\tau,t\right)\right|^2\right\} = \lim_{T\to\infty}\frac{1}{2\cdot T}\cdot \int_{-T/2}^{T/2}\left|h\left(\tau,t\right)\right|^2 dt$$

(using $z^*z = \text{Re}\{z\}^2 + \text{Im}\{z\}^2 = |z|^2 \; \forall \; z \in C$) is defined first representing the average received signal power as a function of the time delay $\tau$. The range of $\tau$ for which PDP($\tau$) is essentially non-zero is called "Multipath Delay Spread". Thereby, PDP($\tau$) can be measured by calculating the RMS value of channel impulse responses measured at different times. Thus, the average delay $\bar{\tau}$ can be obtained using the first moment of $\tau$ in the normalized form

$$\bar{\tau} \equiv \frac{\int_0^\infty \tau\cdot\text{PDP}\left(\tau\right) d\tau}{\int_0^\infty \text{PDP}\left(\tau\right) d\tau}.$$

Since PDP($\tau$) is not a probability density function (PDF), a normalization as given by the denominator of the equation above is needed. With the aid of the first moment $\bar{\tau}$ the average broadening of a transmitted impulse can be expressed as the square root of the second central moment $\sigma_\tau$ of the delay $\tau$. Thus, the RMS delay spread $\Delta$ yields:

$$\Delta \equiv \sigma_\tau \equiv \sqrt{\bar{\tau^2}-\bar{\tau}^2} = \sqrt{\frac{\int_0^\infty \left(\tau-\bar{\tau}\right)^2\cdot\text{PDP}\left(\tau\right) d\tau}{\int_0^\infty \text{PDP}\left(\tau\right) d\tau}},$$

wherein

$$\overline{\tau^2} \equiv \frac{\int_0^\infty \tau^2 \cdot \mathrm{PDP}\left(\tau\right)\mathrm{d}\tau}{\int_0^\infty \mathrm{PDP}\left(\tau\right)\mathrm{d}\tau}$$

denotes the second moment of $\tau$ in the normalized form. Thereby, the RMS delay spread $\Delta$ indicates whether frequency-selective or frequency-nonselective fading conditions can be assumed at a predefined transfer bandwidth B. If the reciprocal value of the RMS delay spread $\Delta$ is approximated by the coherence bandwidth

$$B_{coh} \approx \frac{1}{\Delta},$$

the fading of the mobile radio channel is said to be frequency-selective on the condition that $B_{coh}$ is small in comparison with the transfer bandwidth B. In this case, the signal is severely distorted by the fading effects of the mobile radio channel. When the signal bandwidth becomes large relative to the coherence bandwidth (i.e. the wideband case), the receiver's primary concern becomes ISI, not narrowband notches. In this case, the channel is referred to as frequency-selective multipath fading, since the channel impulse response varies across the signal bandwidth. Frequency-dependent signal distortion normally results in severe ISIs at the receiver, requiring complex wideband equalizers to compensate. When ISI levels become sufficiently severe, the only solution is to decrease the maximum rate of symbol transmission. Therefore it can be concluded that multipath effects increase the required complexity (and power consumption) of the portable receiver.

Otherwise, on the condition that $B_{coh}$ is large in comparison with the transfer bandwidth B, a frequency-nonselective (flat) fading has to be considered. In this case, multipath arrivals are primarily confined to a single symbol interval. In the frequency domain, this corresponds to a channel magnitude response that remains approximately constant across the signal bandwidth of interest. ISIs are then negligible and channel equalization can be accomplished using a single complex-valued gain multiplication.

It must be noted that the exact definition of the coherence bandwidth $B_{coh}$ and the coherence time $T_{coh}$ can be obtained with the aid of the spaced-time correlation function $\phi_H(\Delta f, \Delta t)$ of the multipath propagation channel, which is defined as the Fourier transform of the delay cross-power spectral density $\varphi_h(\tau, \Delta t)$ :

$$\Phi_H\left(\Delta f, \Delta t\right) \equiv \int_{-\infty}^{+\infty} \varphi_h\left(\tau, \Delta t\right) \cdot e^{-j \cdot 2\pi \cdot \Delta f \cdot \tau}\, \mathrm{d}\tau \,.$$

Thereby, one definition of the coherence bandwidth $B_{coh}$ is the smallest distance in frequency domain, for which the spaced-time correlation function $\Phi_H(\Delta f, \Delta t)$ at $\Delta t = 0$ yields one half of its maximum value $\Phi_H(0,0)$ :

$$\left|\Phi_H\left(\Delta f = B_{coh}, \Delta t = 0\right)\right| = \frac{1}{2} \cdot \left|\Phi_H\left(\Delta f = 0, \Delta t = 0\right)\right|.$$

Analogously, one definition of the coherence time $T_{coh}$ is the smallest distance in time domain, for which the spaced-time correlation function $\Phi_H(\Delta f, \Delta t)$ at $\Delta f = 0$ yields one half of its maximum value $\Phi_H(0,0)$ :

$$\left|\Phi_H\left(\Delta f = 0, \Delta t = T_{coh}\right)\right| = \frac{1}{2} \cdot \left|\Phi_H\left(\Delta f = 0, \Delta t = 0\right)\right|.$$

However, usually an approximation is employed assuming that the transfer function

$$H(f,t) \equiv \int\limits_{-\infty}^{+\infty} h(\tau,t) \cdot e^{-j \cdot 2\pi \cdot f \cdot \tau} \, d\tau$$

of the mobile radio channel can be deemed as stationary within a frequency or time period being small compared with the coherence bandwidth $B_{coh}$ or the coherence time $T_{coh}$, respectively.

Orthogonal Frequency Division Multiplex (OFDM)

Since the preferred embodiment of the underlying invention is directed to a pilot-assisted multi-carrier transmission system wherein Orthogonal Frequency Division Multiplex (OFDM) is applied, the basic aspects of OFDM shall briefly be summarized in the following sections.

If a conventional single-carrier transmission system is applied in an environment with severe transmission conditions, the channel equalization, which is supposed to eliminate the influence of the radio channel as far as possible, can be very extensive. The choice of an appropriate modulation technique for wireless data communication is therefore a critical issue due to the adverse influence of the dispersive and mostly time-variant mobile radio channel. In recent years, the interest in multi-carrier modulation for wireless transmission has been revived, whereas in former times the practicality of this concept appeared to be limited.

An approach to multi-carrier modulation which can easily be realized is Orthogonal Frequency Division Multiplexing (OFDM). OFDM offers advantages in transmission over severe multipath channels, so that there is an increased interest in applying OFDM in high-rate mobile or portable data transmission today.

Conventional single-carrier modulation methods for the transmission at high symbol rates experience a severe limitation in time-dispersive and frequency-selective channels due to their sensitivity to intersymbol interference (ISI). To handle ISI, usually the entire bandwidth of the single-carrier signal has to be (adaptively) equalized by quite complex time-domain channel equalizers, like Viterbi equalizers. Thereby, the complexity of a channel equalizer increases with the amount of ISIs which has to be eliminated. If a high data rate R of about $10^7$ modulation symbols per second is transmitted over a radio channel having a maximum delay $\tau_{max}$ of 10 µs, ISIs can arise extending over 100 modulation symbols. A corresponding equalizer can be too expensive for an implementation.

BRIEF DESCRIPTION OF THE PRESENT STATE OF THE ART

According to the state of the art, there are different solutions to the problem of pilot pattern based channel estimation and/or channel tracking available, each of them being optimized to a specific application environment given by the transmission channel, and thus inherently containing certain restrictions.

In the European patent EP 00 114 424.5 (the disclosure of which is hereby incorporated by reference) a device and a method for receiving signals in a wireless cellular OFDM system is disclosed, in which data symbols are transmitted in frequency subcarriers and time slots. Furthermore, a method for performing a channel estimation on the basis of received pilot patterns is described applying a device as mentioned above. Thereby, said channel estimation is performed by means of a filter being selected from a filter bank depending on the measured channel dispersion and other parameters such as an interference reference value. The proposed solution provides a reliable measurement of channel dispersions in a wide range. However, it requires an additional hardware complexity.

A method for measuring the channel dispersion in the receiver by submitting channel estimation samples to an Inverse Fast Fourier Transform (IFFT) is described in the IEEE document "An Adaptive Two-dimensional Channel Estimator for Wireless OFDM with Application to Mobile DVB-T" (IEEE Transactions on Broadcasting, Vol. 46, No. 2, June 2000, pp. 128-133) by F. Sanzi and J. Speidel. The proposed solution provides a reliable measurement of channel dispersions for a plurality of time-variant wireless multipath fading channels. Moreover, the herein described method can suitably be used for choosing the length of the applied guard interval.

The IEEE document "A Simple Adaptive Channel Estimator Scheme for OFDM Systems" (Proc. of IEEE Vehicular Technology Conference, VTC, Amsterdam, Fall 1999, pp. 279-283) by T. Onizawa et al. discloses a method for measuring the channel dispersion using the correlation between two adjacent reference (or pilot pattern) subcarriers. However, the range of channel dispersions which can be measured with the aid of said solution is limited.

Finally, a method for a noise reduction using a channel tracking decision feedback loop is described in the IEEE document "Channel tracking in Wireless OFDM Systems" (IEEE, SCI, Orlando, July 2001) by H. Schmidt et al. In this connection it must be noted that a decision feedback loop is also employed in the proposed solution of the underlying invention, but for a different purpose.

OBJECT OF THE UNDERLYING INVENTION

In view of the explanations mentioned above it is the object of the invention to propose a new technique for a multi-carrier system, which allows to estimate the channel dispersion of the mobile radio channel being severely impaired by a time-variant multipath fading.

This object is achieved by means of the features of the independent claims. Advantageous features are defined in the dependent claims.

SUMMARY OF THE INVENTION

The underlying invention describes a solution for a measurement of the desired channel dispersion in a pilot-assisted OFDM system used for supporting mobile applications within environments being severely impaired by a time-varying multipath fading behavior of the mobile radio channel. Thereby, the invention is specially optimized for extending conventional OFDM-based channel estimation schemes to cope with said severe channel conditions. Furthermore, said method can easily be realized.

The main advantageous difference between the underlying invention and the state of the art is that the invention yields a reliable estimation of the channel dispersion in a multipath fading environment.

A measurement of the channel dispersion $\Delta$ is useful for several reasons. In the following, two examples will be given showing possible applications of the underlying invention.

Example #1

To select the best channel estimation filter for a coherent OFDM receiver, it is important to know the Doppler frequency ($f_D$) and the coherence bandwidth ($B_{coh}$) of the multipath fading channel. The Doppler frequency $f_D$ indicates how the pilot patterns are correlated in time direction, and the coherence bandwidth $B_{coh}$ indicates how the pilot patterns are correlated in frequency direction. Since the channel delay dispersion $\Delta$ can be approximated by the reciprocal value of the coherence bandwidth $B_{coh}$, the correlation of the pilot patterns in frequency direction can be estimated by measuring the channel delay dispersion $\Delta$. For this purpose a filter choice can be made from a set of the candidate filters.

Example #2

For OFDM systems using transmit diversity with space-time block coding and an orthogonal pilot pattern in both time and frequency direction, it is important to note that the receiver has an estimate of the channel delay dispersion $\Delta$ and the Doppler frequency $f_D$. In this way, the receiver can decide whether to use orthogonal pilot patterns in frequency or time direction, respectively.

BRIEF DESCRIPTION OF THE CLAIMS

The independent claim 1 and the dependent claims 2 and 3 refer to a delay spread estimation circuitry used for measuring the delay spread of a mobile radio channel applied to an OFDM receiver for supporting wireless communication over the mobile radio channel by means of a pilot-assisted wireless multi-carrier system. Thereby, said delay spread estimation circuitry comprises a delay spread estimation unit. It is used for performing a delay spread estimation on the basis of the estimated channel impulse response of the mobile radio channel. The delay spread estimation circuitry is realized as a feedback decision loop within the OFDM receiver. Within said delay spread estimation circuitry a delayed version of the received data signal is correlated with an estimated version of the demodulated and re-modulated transmitted data signal in order to estimate the channel impulse response and to calculate the delay spread of the mobile radio channel.

In addition, the independent claim 4 and the dependent claims 5 and 6 relate to a method for measuring the delay spread of a mobile radio channel applied to an OFDM receiver for supporting wireless communication over the mobile radio channel by means of a pilot-assisted wireless multi-carrier system as described above.

The dependent claim 7 refers to a mobile transmission system, realized as a pilot-assisted wireless multi-carrier transmission system, comprising at least one mobile transmitter and/or at least one mobile receiver used for supporting wireless communication over a mobile radio channel. Thereby, the mobile receiver of said mobile transmission system comprises a delay spread estimation circuitry for measuring the delay spread of a mobile radio channel according to anyone of the claims 1 to 3.

Besides, the dependent claim 8 relates to a method for supporting wireless communication over a mobile radio channel according to anyone of the claims 4 to 6 by means of a mobile transmission system comprising at least one mobile transmitter and/or one mobile receiver as proposed in claim 7.

BRIEF DESCRIPTION OF THE DRAWINGS

Further advantages and possible applications of the underlying invention result from the subordinate claims as well as from the following description of two preferred embodiments of the invention which are depicted in the following drawings.

FIG. 1a    presents a block diagram 100a for a mobile transmission system supporting wireless communication over a mobile radio channel 130 by means of a pilot-assisted wireless multi-carrier system considering channel estimation and equalization,

FIG. 1b    shows one example of a detailed view 100b of the OFDM modulator 118,

FIG. 1c    shows one example of a detailed view 100c of the OFDM demodulator 144,

FIG. 2a    exhibits the structure 200a of a typical OFDM receiver 104, wherein the proposed method for estimating the channel dispersion according to the preferred embodiment of the underlying invention is performed, and

FIG. 2b    exhibits the structure 200b of an OFDM receiver 104, wherein the proposed method for estimating the channel dispersion according to the preferred embodiment of the underlying invention is performed, thereby applying optional elements.

DETAILED DESCRIPTION OF THE UNDERLYING INVENTION

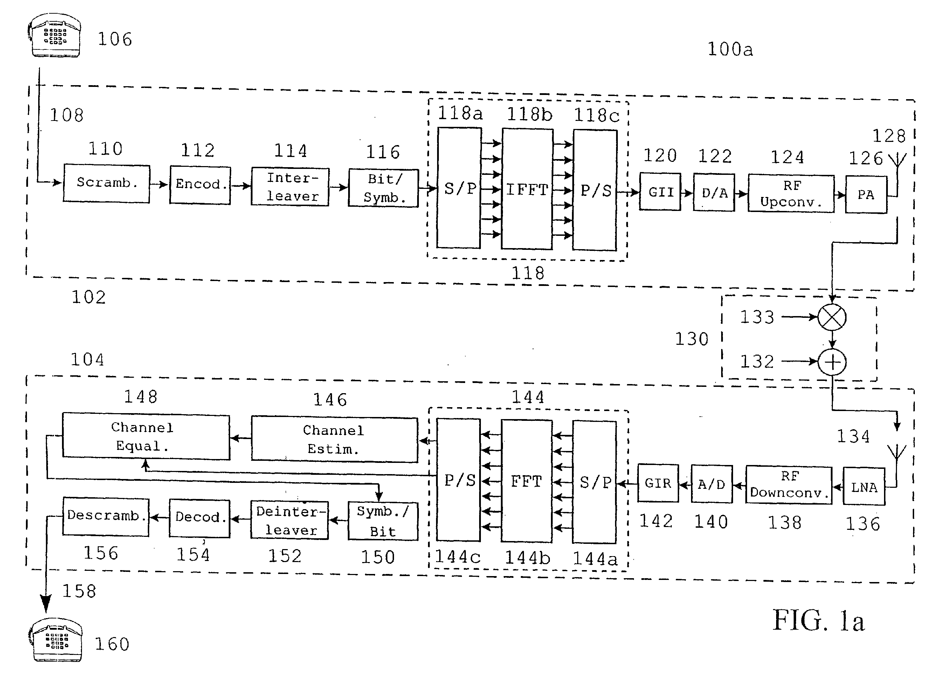

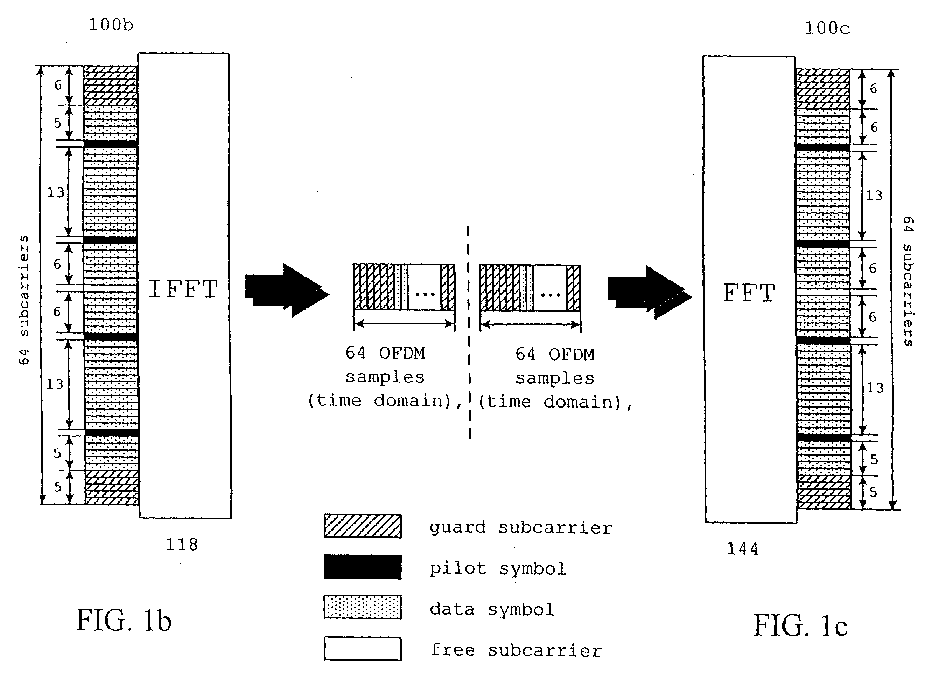

In the following the functions of the structures comprised in a first embodiment of the underlying invention as depicted in Figs. 1a to 2b are explained in detail.

Fig. 1a shows a block diagram of a typical wireless communication system. It refers to a mobile transmission system 100a, realized as a pilot-assisted wireless multi-carrier system considering channel estimation and equalization, comprising one transmitter 102 and one receiver 104 for supporting wireless communication over a mobile radio channel 130.

The input is a binary data stream 108. At first, an optional scrambler 110 is used for randomizing the transmitted input data bits 108. After being submitted to an encoder 112 and an interleaver 114 followed by a bit-to-symbol mapper 116, the data is then transformed into a multilevel signal to be prepared for an OFDM modulation 118. When the serial data stream is converted to parallel by means of the serial-parallel converter 118a, the data rate gets reduced by N, where N is the number of parallel subchannels used for the applied OFDM modulation.

Hence, these parallel channels are essentially low data rate channels, and since they are narrow-band channels they experience flat fading. This is the greatest advantage of the applied OFDM technique. To obtain orthogonality between the subcarriers, the data symbols are mapped to the subcarriers using an Inverse Fast Fourier Transform (IFFT) performed by a digital signal processor 118b, and reconverted to serial by means of a parallel-serial converter 118c. After OFDM modulation a guard interval is inserted with the aid of the guard interval insertion unit 120.

Next, a signal filtering is performed in order to reduce the out-of-band radiation. The signal is then submitted to a digital-analog converter 122 to produce the analog baseband signal, modulated to the RF carrier wave by means of an RF up-conversion unit 124, amplified by means of a power amplifier 126, and transmitted over the mobile radio channel 130. Thereby, the mobile radio channel 130 is a fading channel 133 with Additive White Gaussian Noise (AWGN).

In the receiver the complementary operations are applied in reverse order. At first, the received RF signal is amplified by means of a low noise amplifier 136, down-converted to the baseband by means of the RF down-converter 138, and submitted to an analog-digital converter 140. After the guard interval is removed with the aid of the guard interval removal unit 142, the OFDM demodulation 144 can be performed. The data is then transformed into a multilevel signal to be prepared for an OFDM demodulation.

After the serial data stream is converted to parallel by means of the serial-parallel converter 144a, all subcarriers are separated by applying a Fast Fourier Transform (FFT) performed by a digital signal processor 144b, and reconverted to serial by means of a parallel-serial converter 144c. After the performance of the channel estimation 146 and equalization 148, the data stream is submitted to a symbol-to-bit demapper 150 followed by a deinterleaver 152, a decoder 154, and a descrambler 156 to obtain the output data bits 158.

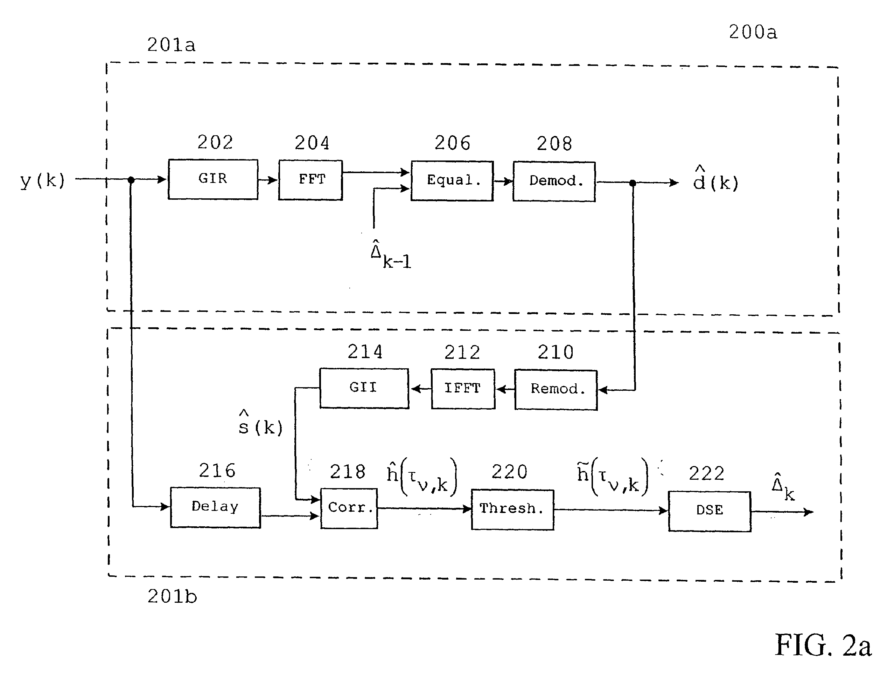

In the context of the preferred embodiment of the underlying invention an OFDM system is also applied. When a coherent OFDM system is employed, the blocks 144 ("OFDM Demodulator") and 146 ("Channel Estimator") blocks can be replaced by the blocks 202, 204, 206, 208, 210, 212, 214, 216, 218, 220 and 222 as depicted in Fig. 2a.

Figs. 1b and 1c exhibit a detailed view of an example of the OFDM modulation 100b performed in the transmitter with multiplexing data symbols and pilot symbols, and the OFDM demodulation 100c performed in the receiver. For example, the data is modulated on $N_{ST} = 64$ subcarriers by means of an Inverse Fast Fourier Transform (IFFT) in the transmitter, and demodulated by means of a Fast Fourier Transform (FFT) in the receiver.

The box 201a ("Standard OFDM Receiver") as depicted in Fig. 2a comprises standard components contained in a typical coherent OFDM receiver. Moreover, the box 201b ("Delay Spread Estimator") comprises additional blocks needed for an estimation of the delay spread. In the following, before explaining the additional blocks, the operation of the standard blocks as depicted in Fig. 2a shall be described.

The received signal y(k), wherein k represents the OFDM symbol number, is passed on from the A/D converter 140 to the Guard Interval Removal (GIR) unit 202 which removes the cyclic prefix of a received pilot pattern. After that, the signal is submitted to a digital signal processor 204 performing a Fast Fourier Transform (FFT) and equalized by means of a channel estimator contained in the equalization unit 206. Thereby, the channel estimator is often implemented as a filter. The optimal choice of the filter coefficients depends on a plurality of various parameters. One of these parameters is the estimated value $\hat{\Delta}_{k-1}$ of the channel dispersion $\Delta_{k-1}$ belonging to the preceding OFDM symbol (k-1) of an observed OFDM symbol k. Since the channel dispersion may change for different OFDM symbols, the estimated channel dispersion for the k-th OFDM symbol shall be written as $\hat{\Delta}_k$.

In a preferred embodiment of the underlying invention a method for quantitatively measuring the estimated channel dispersion $\Delta_k$ related to the channel dispersion of the mobile radio channel 130 is disclosed. The proposed method uses the additional blocks in the box 201b ("Delay Spread Estimator") as depicted in Fig. 2a.

The input of said delay spread estimator 201b can be obtained from the output signal d(k) of the demodulation unit 208. Within said delay spread estimator 201b, the input signal is submitted to a re-modulation unit 210 and to a digital signal processor 212 performing an Inverse Fast Fourier Transform (IFFT). After that, the guard interval is inserted by means of a so-called guard interval insertion (GII) unit 214 forming the estimated transmitted OFDM symbol $\hat{x}$ s(k) being cross-correlated with the delayed received signal y(k), thereby using the delay unit 216 and the parallel correlator 218. The result of this correlation is the estimated channel impulse response $h(\tau_{v,k})$, wherein $\tau_{v,k}$ denotes the delay for the v-th channel estimation sample.

Within the parallel correlator, the maximum number of time shifts is equal to the guard interval length $T_G$, and the correlation length is equal to one symbol duration $T_s$ (not including the length $T_G$ of the guard interval). A threshold unit 220 is then used to remove components of the estimated channel impulse response $h(\tau_{v,k})$ which are lower than the value of a predefined threshold. Said threshold unit 220 is used to reduce the effects of noise. After the threshold unit 220, $\tilde{h}(\tau_{v,k})$ can be derived from $h(\tau_{v,k})$. The delay spread estimation $\Delta_k$ is then obtained for a given symbol k by means of the delay spread estimation unit 222. Thereby, various methods can be employed, of which one is described by means of the following equations:

$$\hat{\Delta}_k \equiv \sigma_{\tau,k} \equiv \sqrt{\overline{\tau_k^2} - \overline{\tau}_k^2} = \sqrt{\frac{\sum_{v}(\tau_{v,k} - \overline{\tau}_k)^2 \cdot \mathrm{PDP}(\tau_{v,k})}{\sum_{v}\mathrm{PDP}(\tau_{v,k})}} \quad (1),$$

with

$$\overline{\tau}_k \equiv \frac{\sum_{v}\tau_{v,k} \cdot \mathrm{PDP}(\tau_{v,k})}{\sum_{v}\mathrm{PDP}(\tau_{v,k})} \quad (2a), \quad \overline{\tau_k^2} \equiv \frac{\sum_{v}\tau_{v,k}^2 \cdot \mathrm{PDP}(\tau_{v,k})}{\sum_{v}\mathrm{PDP}(\tau_{v,k})} \quad (2b)$$

and

$$\mathrm{PDP}(\tau_{v,k}) \equiv \frac{1}{2} \cdot \mathrm{E}\left\{\left|\tilde{h}(\tau_{v,k})\right|^2\right\} \quad (2c),$$

wherein

$\hat{\Delta}_k$        is the measured root mean square (RMS) delay spread estimation or channel delay dispersion for the k-th OFDM symbol,

k        is the index of the respective OFDM symbol,

v        denotes the index of the channel estimation sample or the respective path number,

PDP $(\tau_{v,k})$     denotes the power delay profile of the channel impulse response $\hat{h}(\tau_{v,k})$ after being submitted to a predefined threshold function, thereby yielding $\tilde{h}(\tau_{v,k})$,

$\sigma_{\tau,k}$     is the square root of the second central moment of the delay time $\tau_k$ for the k-th OFDM symbol,

$\tau_{v,k}$     denotes the delay for the v-th channel estimation sample,

$\bar{\tau}_k$     denotes the average delay obtained by using the first moment of the delays $\tau_{v,k}$,

$\overline{\tau_k^2}$     denotes the second moment of the delays $\tau_{v,k}$.

In these equations, the summations are performed over the number of the available channel estimation samples, thereby using $v$ as an index variable. The estimation $\Delta_{k-1}$ of the channel dispersion $\Delta_{k-1}$ for the (k-1)-th OFDM symbol can then be used to obtain the estimation $\Delta_k$ of the channel dispersion $\Delta_k$ for the k-th OFDM symbol.

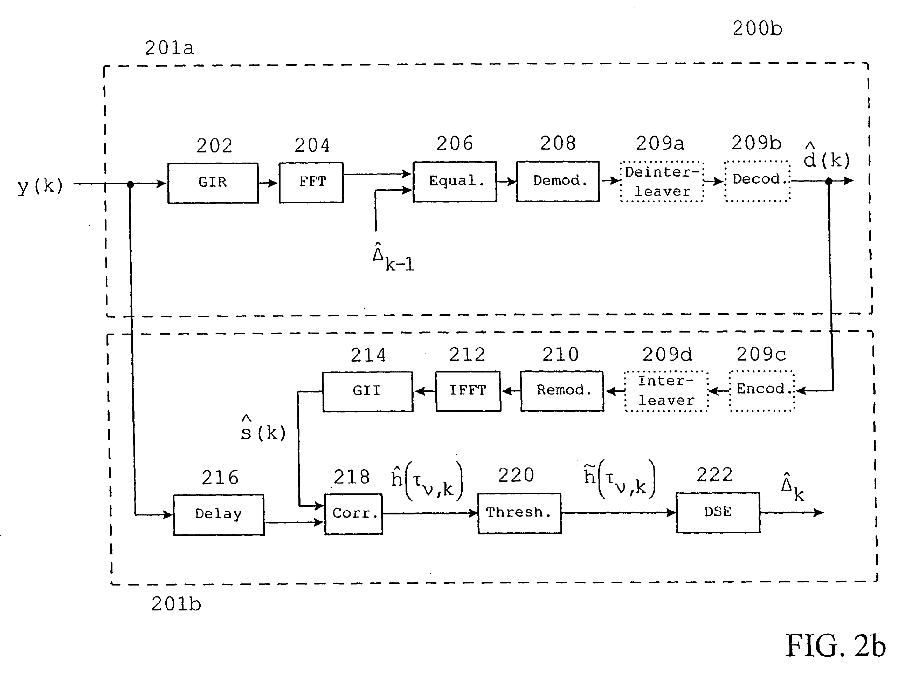

Additional elements 209a-d as depicted in Fig. 2b, comprising a deinterleaver 209a, a channel decoder 209b, a channel encoder 209c and an interleaver 209d, could optionally be added to further increase the reliability of the estimator over a range of signal-to-noise (SNR) ratios. These optional elements 209a-d are shown as dotted line blocks in Fig. 2b. When using these optional elements 209a-d, the input of the delay spread estimator 201b is taken from the channel decoder 209b of the OFDM receiver 201a.

The steps of the proposed new algorithm according to the preferred embodiment of the underlying invention can be summarized as follows:

1. demodulation of the equalized subcarriers (performed in the standard OFDM receiver 201a) for the k-th OFDM symbol,
2. re-modulation of the estimated OFDM symbols,
3. execution of an IFFT to form the estimated transmitted OFDM symbol stream $\hat{s}(k)$ in the time domain,
4. correlation of the transmitted OFDM symbol stream $\hat{s}(k)$ and a delayed version of the received signal $y(k)$ (obtained signal before the guard interval removal unit 202) to form the estimated channel impulse response $\hat{h}(\tau_{v,k})$,
5. limitation of $\hat{h}(\tau_{v,k})$ by means of an adequate threshold to minimize the effect of noise, and
6. calculation of the RMS delay spread $\Delta_k$ using equations (1) to (2c) or other algorithms.

Initially, for the first symbol (k=1), the equalization block 206 has no prior information of any channel dispersion. Thus, a robust filter for a wide range of channel dispersion is recommended. Subsequently, the information of the channel dispersion from previous symbols is obtained and a better filter can be selected to improve the performance.

The significance of the symbols designated with reference signs in the Figs. 1a to 2b can be taken from the appended table of reference signs.

Table of the depicted features and their corresponding reference signs

| No. | Feature |
| --- | --- |
| 100a | block diagram for a mobile transmission system supporting wireless communication over a mobile radio channel by means of a pilot-assisted wireless multi-carrier system considering channel estimation and equalization |
| 100b | detailed view of the OFDM modulator according to an example |
| 100c | detailed view of the OFDM demodulator according to an example |
| 102 | transmitter of said mobile transmission system 100a |
| 104 | receiver of said mobile transmission system 100a |
| 106 | mobile station (MS) of the transmitter |
| 108 | input data bits |
| 110 | scrambler used for randomizing the deterministic behavior of predefined pilots in order to minimize interferences |
| 112 | encoder (e.g. a convolutional encoder) |
| 114 | interleaver |
| 116 | bit-to-symbol mapper |
| 118 | OFDM modulator |
| 118a | serial-parallel (S/P) converter |
| 118b | digital signal processor performing an Inverse Fast Fourier Transform (IFFT) |
| 118c | parallel-serial (P/S) converter |
| 120 | guard interval insertion (GII) and windowing in order to reduce the out-of-band radiation |
| 122 | digital-to-analog (D/A) converter |
| 124 | RF up-conversion unit |
| 126 | power amplifier (PA) |
| 128 | transmitting antenna |

| No. | Feature |
|-----|---------|
| 130 | mobile radio channel, characterized by a severe frequency-selective fading and a time-variant behavior |
| 132 | additive noise |
| 133 | fading |
| 134 | receiving antenna |
| 136 | low noise amplifier (LNA) |
| 138 | RF down-conversion unit |
| 140 | analog-to-digital (A/D) converter |
| 142 | guard interval removal (GIR) and windowing in order to reduce the out-of-band radiation |
| 144 | OFDM demodulator |
| 144a | serial-parallel (S/P) converter |
| 144b | digital signal processor performing a Fast Fourier Transform (FFT) |
| 144c | parallel-serial (P/S) converter |
| 146 | channel estimator |
| 148 | channel equalizer |
| 150 | symbol-to-bit demapper |
| 152 | deinterleaver |
| 154 | decoder (e.g. a convolutional decoder) |
| 156 | descrambler |
| 158 | output data bits |
| 160 | mobile station (MS) of the receiver |
| 200a | structure of a typical OFDM receiver, wherein the proposed method for estimating the channel dispersion according to the preferred embodiment of the underlying invention is performed |
| 200b | structure of an OFDM receiver, wherein the proposed method for estimating the channel dispersion according to the preferred embodiment of the underlying invention is performed, thereby applying optional elements |
| 201a | standard OFDM receiver |

| No. | Feature |
|---|---|
| 201b | delay spread estimation circuitry realized as feedback network of a feedback decision loop |
| 202 | guard interval removal (GIR) unit |
| 204 | digital signal processor performing a Fast Fourier Transform (FFT) |
| 206 | channel equalizer |
| 208 | demodulation unit |
| 209a | deinterleaver |
| 209b | channel decoder |
| 209c | channel encoder |
| 209d | interleaver |
| 210 | re-modulation unit |
| 212 | digital signal processor performing an Inverse Fast Fourier Transform (IFFT) |
| 214 | guard interval insertion (GII) unit |
| 216 | delay unit with an adjustable delay time $\tau_{v,k}$ used for simulating multipath propagation over the mobile radio channel 130 |
| 218 | parallel correlator used for calculating the estimated channel impulse response $\hat{h}(\tau_{v,k})$ |
| 220 | amplitude limiter circuit used for limiting the amplitude of the estimated channel impulse response $\hat{h}(\tau_{v,k})$ in order to reduce the effects of noise |
| 222 | delay spread estimator (DSE) used for performing a root mean square (RMS) delay spread estimation (146) on the basis of an amplitude-limited version $\tilde{h}(\tau_{v,k})$ of the estimated channel impulse response $\hat{h}(\tau_{v,k})$ of the mobile radio channel 130 |

**Claims**

1. A delay spread estimation circuitry for measuring the delay spread of a mobile radio channel (130), wherein said delay spread estimation circuitry (201b) comprises:

13

- means (210, 212) for performing an OFDM multi-carrier re-modulation with the aid of an Inverse Fast Fourier Transform (IFFT),
- a guard interval insertion unit (214),
- a correlator (218) for calculating the estimated channel impulse response,
- a delay spread estimation unit (222) for performing a delay spread estimation on the basis of the estimated channel impulse response of the mobile radio channel (130),

wherein said delay spread estimation circuitry (201b) is realized as a feedback,
**characterized in that**
the delay spread estimation circuitry (201b) is designed to correlate a delayed version (216) of the received data signal with an estimated version of the demodulated and re-modulated transmitted data signal in order to estimate the channel impulse response and/or to calculate the delay spread of the mobile radio channel.

2. A delay spread estimation circuitry according to claim 1, comprising means (220) for limiting the amplitude of the estimated channel impulse response, wherein
the estimated channel impulse response is limited to a predefined threshold in order to reduce the effects of noise before being passed on to the delay spread estimation unit (222).

3. A delay spread estimation circuitry according to anyone of claims 1 and 2,
**characterized in that**
the estimated version of the transmitted data signal is formed by an Inverse Fourier Transform (IFFT) of the demodulated, re-modulated and optionally decoded and re-coded transmitted data signal.

4. A method for measuring the root mean square (RMS) delay spread of a mobile radio channel (130) comprising the steps of:

- performing (210, 212) an OFDM multi-carrier re-modulation with the aid of an Inverse Fast Fourier Transform (IFFT),
- adding (214) guard intervals,
- calculating (218) the estimated channel impulse response,
- performing (222) a delay spread estimation on the basis of the estimated channel impulse response of the mobile radio channel (130),

**characterized in that**
a delayed version (216) of the received data signal is correlated (218) with an estimated version of the demodulated and re-modulated transmitted data signal in order to estimate the channel impulse response and to calculate the delay spread of the mobile radio channel.

5. A method according to claim 4,
comprising the step of limiting (220) the amplitude of the estimated channel impulse response to a predefined threshold in order to reduce the effects of noise.

6. A method according to anyone of claims 4 and 5,
**characterized in that**
the estimated version of the transmitted data signal is formed by an Inverse Fourier Transform (IFFT) of the demodulated, re-modulated and optionally decoded and re-coded transmitted data signal.

7. A mobile transmission system,
comprising at least one mobile transmitter (102) and/or at least one mobile receiver (104) used for supporting wireless communication over a mobile radio channel (130), wherein said mobile transmission system (100a) comprises:

- means (118, 144) for performing an OFDM multi-carrier modulation and/or an OFDM multi-carrier demodulation,
- means (146) for performing a channel estimation, a channel equalization (148) and/or a synchronization on the basis of at least one subcarrier carrying a pilot pattern comprising at least one pilot pattern frame (100) included in at least one data burst of the transmitted RF signal,

**characterized in that**
the mobile receiver (104) of said mobile transmission system (100a) comprises a delay spread estimation circuitry (201b) according to anyone of claims 1 to 3.

8. A mobile telecommunications device,
**characterized by**
a mobile receiver (104) designed for supporting a method according to anyone of the claims 4 to 6.

FIG. 1a

EP 1 294 148 A1

**FIG. 1c**

100c

64 subcarriers

6 | 6 | 13 | 6 | 6 | 13 | 5 | 5

FFT

144

64 OFDM samples (time domain),

64 OFDM samples (time domain), (time domain),

guard subcarrier

pilot symbol

data symbol

free subcarrier

**FIG. 1b**

100b

IFFT

118

6 | 5 | 13 | 6 | 6 | 13 | 5 | 5

64 subcarriers

17

EP 1 294 148 A1

201a

200a

202        204              206        208

y(k) ──────→ GIR ──→ FFT ──────→ Equal. ──→ Demod. ──────→ $\hat{d}(k)$

$\hat{\Delta}_{k-1}$

214        212        210

GII ←── IFFT ←── Remod.

$\hat{s}(k)$

216              218   $\hat{h}(\tau_{\nu,k})$   220   $\tilde{h}(\tau_{\nu,k})$   222   $\hat{\Delta}_{k}$

Delay ──────→ Corr. ──────→ Thresh. ──────→ DSE ──────→

201b

FIG. 2a

18

FIG. 2b

EP 1 294 148 A1

## EUROPEAN SEARCH REPORT

European Patent Office

**Application Number**

EP 01 12 1934

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 544 156 A (EWERBRING LARS-MAGNUS ET AL) 6 August 1996 (1996-08-06)<br>* page 8, column 5, line 66 - column 6, line 22 *<br>* page 8, column 6, line 37 - line 39 *<br>* figure 1 *<br>* figure 4 * | 1-8 | H04L25/02<br>H04L27/26 |
| A | WO 00 44144 A (NIX ANDREW ROBERT ;ARMOUR SIMON (GB); UNIV BRISTOL (GB); BULL DAVI) 27 July 2000 (2000-07-27)<br>* page 3, line 10 - line 12 *<br>* page 5, line 13 - line 34 *<br>* figure 1 * | 1-8 | |
| A | SCHOEBERL T ET AL: "MODELLIERUNG UND MESSUNG DER ELEKTROMAGNETISCHEN WELLENAUSBREITUNG IN PIKOZELLULAREN FUNKNETZEN"<br>FREQUENZ, SCHIELE UND SCHON GMBH. , vol. 51, no. 9/10,<br>1 September 1997 (1997-09-01), pages 237-244, XP000751082<br>BERLIN, DE<br>ISSN: 0016-1136<br>* page 241, column 1, paragraphs 2,3 * | 1-8 | |
| A | MIGNONE V ET AL: "CD3-OFDM: A NOVEL DEMODULATION SCHEME FOR FIXED AND MOBILE RECEIVERS"<br>IEEE TRANSACTIONS ON COMMUNICATIONS, vol. 44, no. 9,<br>1 September 1996 (1996-09-01), pages 1144-1151, XP000628336<br>IEEE, New York, US<br>ISSN: 0090-6778<br>* page 1145, column 2, last paragraph *<br>* figure 5 * | 1-8 | |

**TECHNICAL FIELDS SEARCHED (Int.Cl.7)**

H04L

-/--

The present search report has been drawn up for all claims

| Place of search | Date of completion of the search | Examiner |
|---|---|---|
| THE HAGUE | 22 February 2002 | Moreno, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 01 12 1934

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 251 233 A (LABEDZ GERALD P ET AL) 5 October 1993 (1993-10-05) * abstract * * figure 4 * | 2,5 | |

TECHNICAL FIELDS SEARCHED (Int.Cl.7)

The present search report has been drawn up for all claims

| Place of search | Date of completion of the search | Examiner |
|---|---|---|
| THE HAGUE | 22 February 2002 | Moreno, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 294 148 A1

**ANNEX TO THE EUROPEAN SEARCH REPORT
ON EUROPEAN PATENT APPLICATION NO.**  EP 01 12 1934

22-02-2002

| Patent document cited in search report | | Publication date | Patent family member(s) | | Publication date |
|---|---|---|---|---|---|
| US 5544156 | A | 06-08-1996 | AU | 697493 B2 | 08-10-1998 |
| | | | AU | 2422895 A | 29-11-1995 |
| | | | BR | 9507529 A | 02-09-1997 |
| | | | CA | 2188869 A1 | 09-11-1995 |
| | | | CN | 1147321 A ,B | 09-04-1997 |
| | | | DE | 69524403 D1 | 17-01-2002 |
| | | | EP | 0758504 A1 | 19-02-1997 |
| | | | FI | 964344 A | 28-10-1996 |
| | | | JP | 10504143 T | 14-04-1998 |
| | | | NZ | 285198 A | 27-07-1997 |
| | | | RU | 2152686 C1 | 10-07-2000 |
| | | | WO | 9530289 A2 | 09-11-1995 |
| WO 0044144 | A | 27-07-2000 | AU | 3066300 A | 07-08-2000 |
| | | | EP | 1142245 A1 | 10-10-2001 |
| | | | WO | 0044144 A1 | 27-07-2000 |
| US 5251233 | A | 05-10-1993 | AU | 657287 B2 | 09-03-1995 |
| | | | AU | 9165491 A | 22-07-1992 |
| | | | BR | 9107237 A | 05-04-1994 |
| | | | CA | 2097694 A1 | 21-06-1992 |
| | | | CN | 1067344 A ,B | 23-12-1992 |
| | | | DE | 69131167 D1 | 27-05-1999 |
| | | | DE | 69131167 T2 | 11-11-1999 |
| | | | EP | 0563300 A1 | 06-10-1993 |
| | | | ES | 2131068 T3 | 16-07-1999 |
| | | | FI | 932823 A | 18-06-1993 |
| | | | IL | 100456 A | 30-03-1995 |
| | | | JP | 6506324 T | 14-07-1994 |
| | | | KR | 9707362 B1 | 07-05-1997 |
| | | | MX | 9102720 A1 | 01-06-1992 |
| | | | NZ | 241128 A | 29-01-1997 |
| | | | NZ | 270872 A | 29-01-1997 |
| | | | WO | 9211708 A1 | 09-07-1992 |

EPO FORM P0459